(19) Europäisches Patentamt
European Patent Office
Office européen des brevets

(11) **EP 1 536 605 A1**

(12) **EUROPEAN PATENT APPLICATION**

(43) Date of publication:
**01.06.2005 Bulletin 2005/22**

(51) Int Cl.7: **H04L 27/36**, H04L 27/38

(21) Application number: **03425760.0**

(22) Date of filing: **28.11.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **Siemens Mobile Communications S.p.A.**<br>**20126 Milano (IT)** | (72) Inventors:<br>• **Buoli, Carlo**<br>  **20060 Bussero (IT)**<br>• **Di Donna, Giambattista**<br>  **20064 Gorgonzola (MI) (IT)**<br>• **Ferrucci, Luca Giovanni, Dr.**<br>  **Milan (IT)**<br>• **Turillo, Tommaso**<br>  **20063 Cernusco Sul Naviglio (MI) (IT)** |

(54) **Amplitude modulation combined with phase or with frequency modulation**

(57)      A digital transmitter comprises a mapper (MAP) which receives an information sequence at bitrate $f_R$ and outputs in correspondence two symbol words of $N$ and $M$ bits, at a baud-rate of $f_R/(N+M)$, the first one directed to an angular modulator (CPM/FM MOD) and the second one directed to a D/A converter and then to an amplitude modulator built up into a power stage (BB). The two digital words are used to assign (mapping) the instantaneous value of the frequency shift (one value among $2^N$ possible values) and to set the amplitude level of the output signal (one level among $2^M$ possible levels), respectively. The two types of modulation are performed in parallel by adjusting the reciprocal delay on the two branches both terminating in the power stage. A microwave power FET (CC-PWA) polarized into the saturation region is used for amplifying the angular modulated signal. The AM modulation is superimposed to the angular CPM/FM modulation at the final stage by modulating the supply voltage of the saturated FET with the PAM pulses at the output of a video amplifier connected to the D/A converter. Alternatively, a variable diode-PIN attenuator at the output of the FET is controlled by the PAM pulse. The receiver includes a standard front-end stage followed by a down converter to IF and a splitter towards the angular and the AM demodulators which works in parallel. The two demodulated digital words of $M$ and $N$ bits are assembled into digital words of M+N bits meeting with the subdividing rule used by the transmitter; these words are serialized to obtain an output bitstream representative of the transmitted one. A mainly digital variant of the receiver is based on a processing unit to build-up a quadrature demodulator used for CPM/FM demodulating the N-bits digital words and calculate the module of the I-Q vector for AM demodulating the M-bits digital words.

**CPM/FM & AM TRANSMITTER STRUCTURE**

**FIG. 3**

**Description**

**FIELD OF THE INVENTION**

The present invention refers to the field of digital radio communications systems and in particular to a method and system of digital radio communications employing uncorrelated phase/frequency and amplitude modulations.

**BACKGROUND ART**

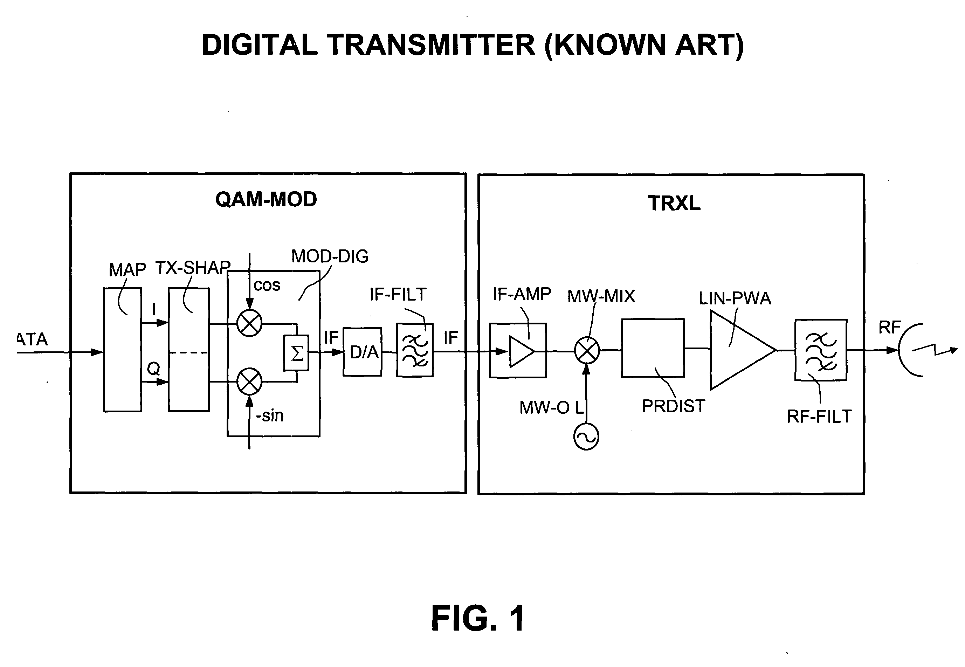

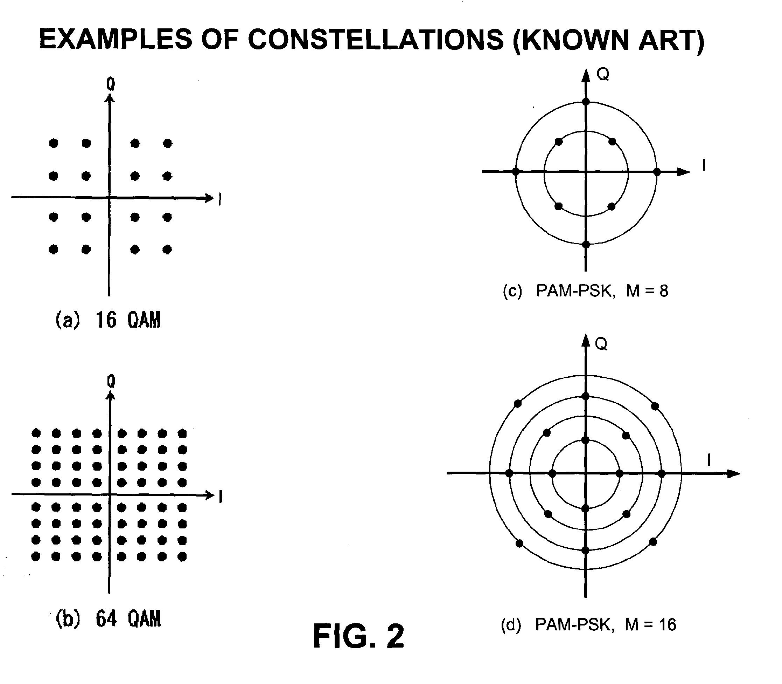

Radio links have to cope with opposite requirements: good spectral efficiency and performances on one side, system robustness and low cost on the other side, especially for low capacity digital radio. Modulation schemes normally used to obtain good spectral efficiency (16 QAM (Quadrature Amplitude Modulation)and up) produce signals which need to be generated and received with low phase noise oscillators and to be demodulated with synchronous demodulator. These two requirements increase the cost of the transceiver and its sensitivity to thermal and mechanical stresses. e.g.: VCO (Voltage Controlled Oscillator) microfonicity and frequency jumps during temperature cycles. A low cost system, normally intended for low capacity traffic (up to 34 Mbit/s), must use an easy modulation scheme; even if the multilevel QAM spectral efficiency is not normally the major concern, it is an interesting target. On the other hand, medium/high capacity systems are costly other than the aforementioned reasons also as a consequence of the great complexity of the data detector included in the receiver, which shall correctly operate with large symbol constellations and very low BER (Bit Error Rate ) values. These two requirements are in conflict with each other, in fact, the larger the constellation the narrower the distance between adjacent points and the higher the probability of wrong decisions.
In order to better understand some problem deriving from the prior art, it is useful to firstly discuss the circuital architecture of a QAM transmitter and the relevant constellations, as shown in **figures 1** and **2**. For the sake of simplicity, the dual QAM receiver is not shown the figures. The transmitter of fig.1 is subdivided in two main blocks: QAM-MOD and TRXL.; the first one being a M-QAM modulator, while the second one is devoted to the transmission. With reference to the QAM-MODE modulator, a serial digital stream $\{\alpha_n\}$ at bitrate $f_R$ representing the information sequence reaches the input of a mapper MAP which groups blocks of k-bits together to be converted into two I, Q parallel digital words at baud-rate $f_R/k$. The $M = 2^k$ couples of I, Q words represent the in-phase and in-quadrature components of a vector used for indicating M possible transmission symbols of the alphabet $\{s_m(t), m = 1,2, ...., M\}$ on the I-Q plane. Components I, Q are filtered by two low-pass digital filters TX-SHAPE with Root Raised Cosine frequency response and a given roll-off, used to shape the transmission pulse. The I, Q filtered components are sent to a quadrature modulator QUAD-MOD to be digitally multiplied by respective cosine and -sine digital sinusoids at intermediate frequency. The IF components are summed up to obtain a QAM modulated signal in digital form, which is digitally-to-analog (D/A) converted and filtered by a bandpass analog filter IF-FILT, obtaining a modulated IF analog signal. The latter is amplified by an IF amplifier IF-AMP and converted to radiofrequency by a mixer MW-MIX pumped by a microwave sinusoidal signal MW-OL, generated by a reference oscillator. The microwave modulated signal at low power level goes through the cascade of the following devices: a predistorter PREDIST, a linear microwave power amplifier LIN-PWA, and a bandpass filter RF-FILT coupled to the transmitting antenna. The predistorter introduces on the RF signal a distortion opposite to the one introduced by the amplifier LIN-PWA due to the compression of the gain at the highest levels.
The receiver (not shown) includes the cascade of the following devices: bandpass RF filter, front-end low-noise amplifier, down-converter to IF, bandpass IF filter, quadrature demodulator, A/D converter, low-pass filter, data detector, decoder, and parallel-to-serial converter.
In operation, the M-QAM modulation is obtained by impressing two separate n-bit symbols from the information sequence $\{\alpha_n\}$ on two quadrature carriers $\cos 2\pi f_o t$ and $\sin 2\pi f_o t$ . The corresponding signal waveforms may be expressed as:

$$s_m(t) = \mathrm{Re}[(A_{mc} + jA_{ms})g(t)\cdot e^{j2\pi f_o t}], \qquad m = 1,2,...,M, \qquad 0 \le t \le T \tag{1}$$

$$= A_{mc}g(t)\cos 2\pi f_o t - A_{ms}g(t)\sin 2\pi f_o t \tag{2}$$

$$= V_m g(t)\cos(2\pi f_o t + \theta_m) \tag{3}$$

where: $T$ is the symbol time, $A_{mc}$ and $A_{ms}$ are the information-bearing signal amplitudes of the quadrature carriers;

$$V_m = \sqrt{A_{mc}^2 + A_{ms}^2} \tag{4}$$

and

$$\theta_m = \tan^{-1}(A_{ms}/A_{mc}). \tag{5}$$

From the above expression for M-QAM it descends that: $s_I(r) = V_m g(r)\cos\theta_m$ and $s_Q(r)=V_m g(r)\sin\theta_m$ are the baseband I-Q components of digital symbols. From expression (3) it is apparent that the QAM signal waveforms may be viewed as combined amplitude and phase modulation. In fact, we may select any combination of $M_1$-level PAM (Pulse Amplitude Modulation) and $M_2$-phase PSK to construct M = $M_1 M_2$ combined PAM-PSK signal constellation. If $M_1 = 2^m$ and $M_2 = 2^n$, the combined PAM-PSK signal constellation results in the simultaneous transmission of $m+n$ = log $M_1 M_2$ binary digits occurring at a symbol rate R/$(m+n)$.

**Figures 2(a)** and **2(b)** show 16-QAM and 64-QAM rectangular constellations obtainable at the output of the mapper MAP of the preceding figure. **Figures 2(c)** and **2(d)** show PAM-PSK circular constellations for M = 8 and M = 16. Other types of constellations are possible by an appropriate coding, but rectangular constellations are the ones with minimum Euclidian distance between adjacent points.

The constellations of the preceding figures highlight a fixed and predetermined correlation between phase and amplitude values; this means that a predetermined couple of amplitude-phase values is assigned to a given $k$-bit configuration of the digital stream. The representation of a QAM modulation through a relevant constellation is just due to the highlighted fixed correlations, otherwise this type of representation is not appropriate. The deterministic amplitude and the phase of each symbol on the I-Q plane are derivable as indicated in (1) to (5), which show the inmost connection between phase and amplitude; in other words it is impossible to indicate the phase independently of the amplitude, and vice versa. This also means that the two I-Q amplitude modulations shall be impressed simultaneously on the IF carrier for obtaining a transmission carrier both amplitude and phase modulated, as specified, during the symbol interval. As a consequence of the amplitude modulation of the transmission carrier, QAM modulations call for highly linear RF power amplifiers able to reproduce the constellation without distortion of the modulated carrier up to the microwaves. Unfortunately QAM modulations, especially for the highest modulation levels, have high peak-to-mean envelope power ratio (PMEPR). This constitute a problem for linear RF power amplifiers because high OBOs (Output Backoff) are needed, where OBO is the amount (in dB) by which the average output power is backed off (reduced) from the saturation power of the active device. Large OBOs reduce the efficiency of conventional linear power amplifiers, and call for solutions. A known way to reduce the OBO is that of using linearizing circuits, for example a predistorter upstream the amplifier.

In order to overcome the linearity problems of the power amplifiers, either CPM (Continuous Phase Modulation) or FSK (Frequency-Shift Keying) modulations might be exploited. In fact, contrarily to QAM, these modulations impress constant amplitude envelope on the transmitted carrier so as amplitude modulation is unneeded. This allows to exploit the saturation region of the active device used as RF power amplifier. As known, non-linear amplification of sinusoidal signals is more efficient than linear amplification; in equivalent words, class-C with respect to class-A. The major drawback of CPM and FSK modulations is that they don't allow to reach the high spectral efficiency of the QAM.

### OBJECTS OF THE INVENTION

The main object of the present invention is that to address a need arising in the field of digital radio communications and indicate a modulation method capable of obtaining both spectral efficiency and a simpler embodiment of the transmission and/or reception apparatuses.

### SUMMARY AND ADVANTAGES OF THE INVENTION

The invention achieves said objects by providing a modulation method useful for digital radio communications, as disclosed in claim 1.

According to the modulation method of the present invention, at each symbol time, the transmission carrier is either phase or frequency modulated into one out of $M_1$ discrete phase/frequency steps, then the phase/frequency modulated signal with constant envelope is pulse amplitude modulated into one out of $M_2$ discrete amplitude steps. Operating as such, amplitude and phase/frequency modulations are reciprocally independent (orthogonal) and can be separated at the receiving side without crosstalk. The rule used to assign $m$, $n$ bits to the respective modulations is immaterial, but In order to decrease the receiver sensitivity to phase jumps and phase noise, the $n$ bits can be assigned according to the differential encoding rule by which a phase difference between two successive symbol times is coded. Also with the method of the invention a number of $k = m+n = \log M_1M_2$ binary digits are grouped together to indicate the $M = M_1M_2$ possible states occurring at a symbol rate R/$(m+n)$ but, differently from the QAM modulation (in particular PAM-PSK), the amplitudes and the phases are not correlated to each other. In other words, once a phase value has been assigned by a particular combination of the $n$ bits, the amplitude is not assigned contextually to the phase but the remaining m bits are freely used to set up the amplitude level of the phase-modulated carrier. The difference is not trivial because, due to the reciprocal independence of the two type of modulations, they can be performed in parallel. Dependence or independence between angular and amplitude modulations can be considered from a statistical point of view. Assuming symbols I/Q statistically independent, in case of uncorrelated modulations the conditional probability P(Amplitude | Phase) is lower than correlated ones, the fact is advantageous if the best S/N ratio of the PM /FM with respect to AM is considered. The modulation method of the present invention offers similar spectral efficiency as a QAM modulated signal. The idea to add up an AM modulation to a pre-existent phase/frequency modulation in such a way they are orthogonal allows to convey greater capacity on the pre-existent channel bandwidth. In this case, the original MAP block should be modified in a way to serial to parallel convert $N+M$ bits during the same symbol time instead of the former $N$ bits, the additional M bits being assigned to amplitude modulation. Obviously, the original bitrate increases of a factor $(N+M)/N$.

Other object of the invention is a demodulation method designed to cope with the modulation method of the invention, as disclosed in an independent claim. Because of PM/FM and AM are two orthogonal modulations, the relative demodulation processes are virtually independent and can be carried out in parallel. Separate detections are performed for AM and PM/FM to obtain the $m$, $n$ bits of the $m + n$ symbol word. The rule followed to assign singular bits is the same as per the modulation.

Other object of the invention is a digital radio transmitter operating according to the modulation method of the invention, as disclosed in an independent claim. Differential phase encoding allows a simplification of the receiver paying the price of 3 dB increase on the S/N ratio. In the practical case the double modulated signal is transmitted with a saturated transmitter section, the advantage is a higher efficiency in power amplification. In a preferred embodiment of the transmitter the AM modulation is superimposed at the final stage, by modulating the supply voltage of a saturated FET. According to a variant of the transmitter suitable for monolithic RF power amplifiers, the AM modulation is superimposed after the final power stage by a variable attenuator at the output of this stage. The saturated power stage allows high power efficiency and higher output power levels than in QAM modulated systems. Higher output power can compensate, in some limits, the higher signal to noise needed.

Other object of the invention is a digital radio receiver designed for cooperating with the transmitter, as disclosed in an independent claim. The embodiment based on differential phase detector reduces the sensitivity to phase jumps, allowing a less expensive microwave electronic due to unneeded coherent carrier detection. The requirements on the local oscillators phase noise, which represent a problem on QAM systems, are less stringent. In a first embodiment of the receiver the analog IF signal is forwarded to the inputs of the two type of modulators which work in parallel. In a second embodiment the IF signal is A/D converted and forwarded to an ASIC which carries out the two demodulations in fully digital fashion.

## BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:

- **fig.1,** already described, shows a QAM digital transmitter of the known art;
- **figures 2(a)** to **2(d),** already described, show some known examples of symbol constellations transmissible by the transmitter of fig.1;
- **fig.3,** shows a simplified functional representation of the CPM/FM and AM transmitter of the present invention;
- **figures 3a, 3b** show two stages AA and BB belonging to the transmitter of fig.3;
- **fig.4** shows a simplified functional representation of the CPM/FM and AM receiver of the present invention; and
- **fig.5** shows an alternative embodiment of the receiver of fig.4.

## DETAILED DESCRIPTION OF AN EMBODIMENT OF THE INVENTION

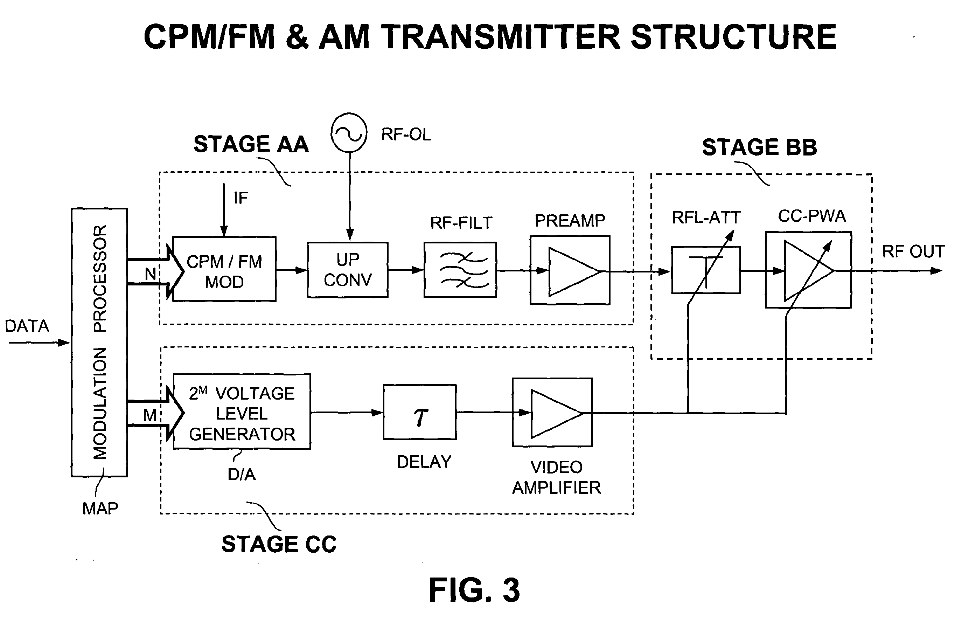

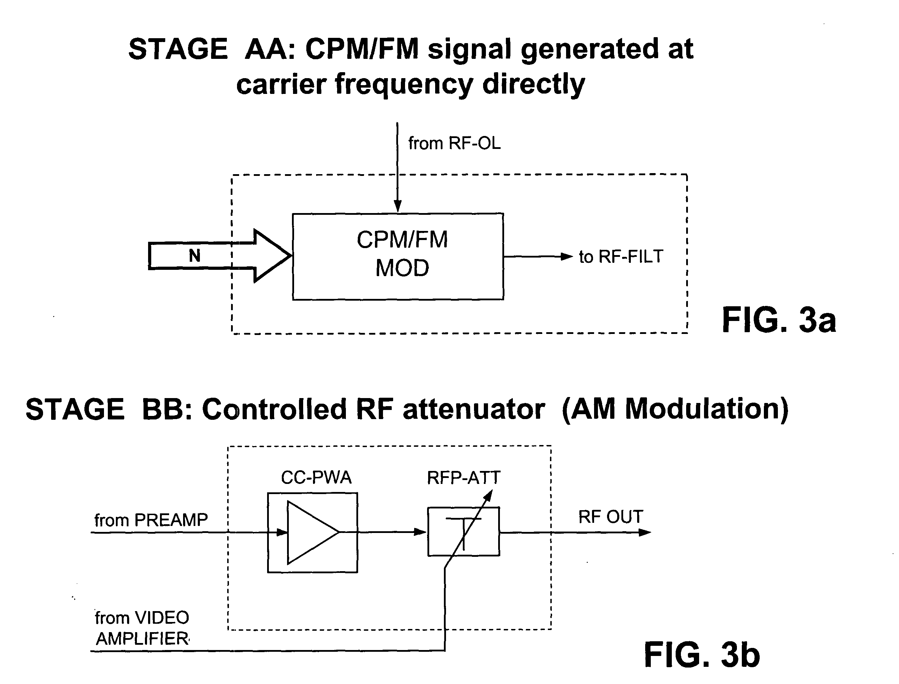

With reference to **fig.3** we see a digital transmitter comprising: a MODULATION PROCESSOR, labelled MAP, which receives a serial digital flux $\{\alpha_n\}$ at bitrate $f_R$, representing the information sequence, and outputs in correspondence two symbol words of $N$ and $M$ bits, at a baud-rate of $f_R/(N+M)$, the first one directed to an angular modulator CPM/FM MOD and the second one directed to a D/A converter and then to an amplitude modulator built up into a power stage BB. The CPM/FM MOD modulator and the D/A converter are located at the begin of respective branches which are joining together in correspondence of the common power stage BB. The first branch, indicated as STAGE AA, includes the cascade of the following blocks: CPM/FM MOD, UP CONV, RF-FILT, and PREAMP. The second branch, indicated as STAGE CC, includes the cascade of the blocks: D/A, DELAY, and VIDEO AMPLIFIER. The power stage BB includes a controlled attenuator RFL-ATT and a RF power amplifier CC-PWA. The output of block PREAMP is connected to the input of RFL-ATT. The output of VIDEO AMPLIFIER is connected to the control input of both RFL-ATT and CC-PWA.

In operation, the bitstream DATA at the input of MAP block is parallelly converted into digital words, conventionally termed information symbols, at submultiple cadence with respect to the cadence of the input digits. Each digital word of the input sequence is subdivided into two digital words of N and M bits, used to assign (mapping) the instantaneous value of the frequency shift (one value among $2^N$ possible values) and to set the amplitude level of the output signal (one level among $2^M$ possible levels), respectively. The preferred mapping is Gray encoding. The MAP block also performs baseband filtering of the two sequences of digital words, in order to shape the transmission pulse. Starting from the first branch, the CPM/FM MOD modulator receives a locally generated intermediate frequency signal IF and outputs either a phase or frequency modulated signal. As known, phase and frequency modulation are considered as an unique angular modulation, in this optic a frequency modulator preceded by a derivator circuit can be used as phase modulator. The angularly modulated signal is up-converted to microwaves by the UP-CONV mixer pumped by an RF sinusoidal signal present at the output of a local oscillator RF-OL. The microwave modulated signal is bandpass filtered by RF-FILT and pre-amplified by PREAMP before reaching the power stage BB. The CPM/FM MOD modulator can be realized with a Voltage Controlled Oscillator at IF frequency, in this case the N parallel bits are converted in one among $2^N$ possible voltage levels and this voltage is applied to the modulation input of the VCO. Another possibility, which allows a better control of the FM modulation index, is that the MAP block maps the N parallel bits into I-Q symbols supplied to a sine and cosine quadrature modulator internal to the processor block, in order to have constant envelope signal at the output and phase lags or leads corresponding to negative or positive values for the frequency shift, as in the previous case. With CPM modulation the quadrature modulator shall build-up a phase trajectory through consecutive symbol periods by assigning proper values to the I-Q components. This solution eliminates the uncertainties about the FM modulation index that a CPM implemented with a VCO controlled by the modulating signal generally undergoes. The frequency of the transmitted carrier and channel bandwidth can be assigned inside wide ranges of values, according to the particular system application and the conveyed capacity in Mb/s.

Considering now the second branch, the D/A converter includes a $2^M$ voltage level generator driven by the M-bit symbols in order to generate PAM pulses at symbol time, Each pulse is delayed by a fixed delay $\tau$ for aligning the delays on the two branches. The delayed pulses are sent to the input of the Video Amplifier, which drives the power stage BB for a correct AM modulation into the channel bandwidth. Delay $\tau$ is not tied to the period of the carrier but rather to the scale of symbol time, in first approximation it should be lesser than one fourth of symbol time. The CC-PWA power amplifier is a GaAsFET biased in the saturation region to be used as amplitude modulator of the phase/frequency modulated signal at constant envelope present at the input. Drain modulation of the voltage supplied to the FET refers to AM modulating schemes well known in the technical literature. The RFL-ATT variable attenuator, if needed, helps to decrease the AM to PM intermodulation produced by the CC-PWA amplifier on amplitude modulation peaks. The amplitude modulation index is determined according to a trade-off criterion between the performances of the two modulators. Higher amplitude modulation indexes improve the performance of AM but decreases the average transmitted power, worsening the performances of the angular modulation consequently. Once the amplitude modulation index is determined, the number M and N are determined, accordingly.

With reference to **fig.3a,** a variant of the stage AA (fig.3) is shown in which the CPM/FM modulator includes a VCO driven at the RF carrier frequency directly, bypassing the intermediate IF conversion stage. An RF-OL local oscillator is provided at the purpose.

With reference to **fig.3b,** a variant of the power stage BB suitable for monolithic amplifier not directly accessible at the inside, is shown. With respect to the same stage of fig.3, the RFL-ATT block is absent, the CC-PWA amplifier doesn't introduce AM modulation, and a variable attenuator RFP-ATT is connected downstream the CC-PWA amplifier. The control input of the RFP-ATT attenuator is connected to the output of the Video Amplifier for receiving the PAM control signal. The maximum power level settled at the output of the transmitter is such to allow the embodiment of the variable attenuator by means of diodes arranged to operate at the microwaves. A possible scheme includes cascaded $\pi$ sections with diodes on the vertical branches separated by $\lambda/4$ transmission line tracts on the horizontal branches acting as impedance inverters able to maintain good matching into the admitted attenuation range. The degree of attenuation is controlled by varying the DC polarization current of the diodes, namely: the greater the current the lower the diode internal resistance and the greater the attenuation. The minimum attenuation happens in correspondence of the maximum PAM level at the output of the level generator D/A, the vice versa is also true. In order to not distort the envelope of the amplitude modulation, the attenuation needs to vary linearly with the control voltage at the output of Video Amplifier. Considered the low amplitude modulation indexes really requested and the consequent low attenuation values, the linearity requirements is not difficult to satisfy.

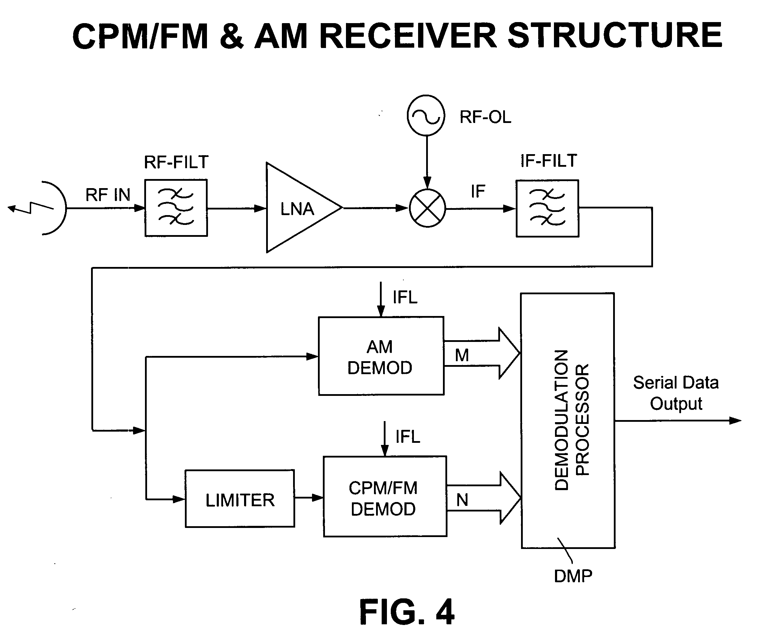

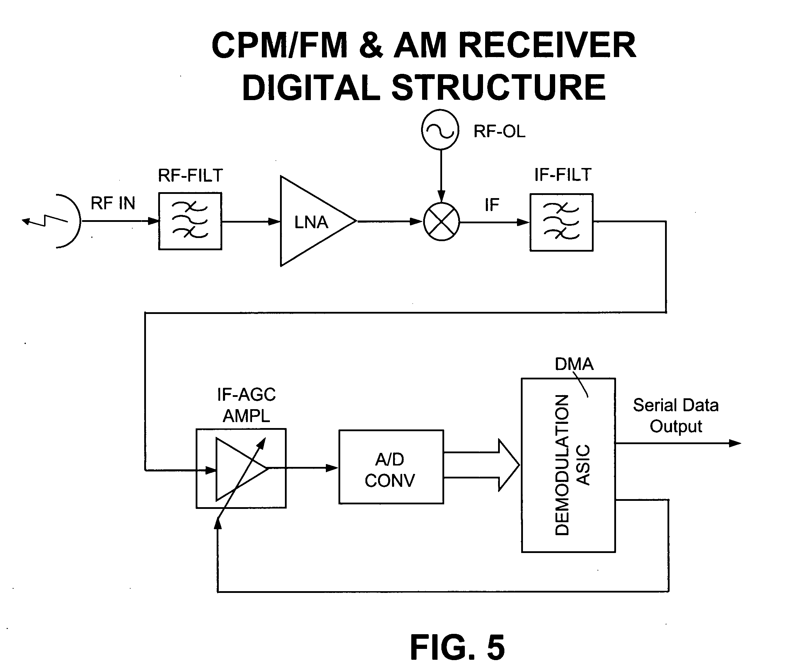

**Figures 4** and **5** show two embodiments of the receiver designed to cooperate with the transmitter of **fig.3**. The receivers represented in the two figures include a standard microwave receiving section with filtering, amplification, and RF to IF conversion stage connected to a demodulation section different between the two embodiments. Demodulation section of **fig.4** is implemented in mainly analog fashion, it includes a first CPM/FM DEMOD demodulator for phase/frequency demodulation, and a second AM DEMOD demodulator for amplitude demodulation. The two demodulators are connected to a DEMODULATION PROCESSOR, labelled DMP. Only symbol and bit synchronization are required. Demodulation section of **fig.5** is implemented in mainly digital fashion, it includes a DEMODULATION ASIC, labelled as DMA. Other than symbol and bit, also carrier synchronization is needed with this embodiment. In such a case the frequency of the transmitted carrier is tracked by a PLL fast enough to recover possible frequency jumps of the remote and/or RF local oscillator/s.

The demodulated digital words of M and N bits, either referred to **fig.4** or **5**, are assembled into digital words of M+N bits meeting with the subdividing rule used into the transmitter, differentially decoded to recover the original information symbol, and serialized to obtain an output bitstream which is representative of the serial data stream at the transmitter input.

The receiving section, common to the two embodiments, includes a bandpass filter RF-FILT connected between the antenna and the input of a low-noise amplifier LNA, whose output signal is down-converted to IF by a mixer pumped by a local oscillator signal coming from a reference oscillator RF-OL. The IF modulated signal is filtered by a bandpass filter IF-FILT and split into two signals which are forwarded to the input of the two demodulators. An IFL sinusoidal oscillation locally generated at intermediate frequency is sent to the two demodulators to perform baseband conversion before demodulation.

With reference to **fig.4,** a LIMITER is placed upstream the CPM/FM DEMOD block to bring constant the amplitude of the received signal, removing in this way any PAM modulation, to achieve a correct frequency discrimination. The CPM/FM DEMOD block indicates a homonym demodulator based on known discriminator circuitry (e.g.: Foster-Seely, PLL, etc.) connected to a simplified A/D converter which outputs the N-bit words. The AM DEMOD block indicates a homonym demodulator based on an envelope detector insensitive to frequency deviations, connected to a simplified A/D converter which outputs the M-bit words. Amplitude and frequency modulations had been impressed by the transmitter in such a way to be orthogonal, so that they can be separated at the receiver side without introducing crosstalk and the two demodulators can work in parallel.

With reference to **fig.5,** the demodulation section includes the cascade of the following blocks: IF-AGC AMPL, A/D CONV, and DMP. The latter outputs serial data at a first output and a feedback signal at a second output. The feedback signal is directed to the control input of the first IF-AGC AMPL block. This block is an AGC circuit used to set the correct value at the input of the A/D converter placed downstream. The AGC circuit is commanded to recover the fading on the radio path in order to the ASIC can correctly estimate the PAM envelope. DEMODULATION ASIC includes a quadrature I, Q demodulator and two baseband filters of these components. It performs differential phase detection from the I, Q components estimated by calculating $\tan^{-1}(Q/I)$; this allows high robustness against local oscillators frequency jumps. Furthermore, the ASIC performs amplitude demodulation by estimating the amplitude level of the baseband filtered carrier, for example, calculating its module

$$\sqrt{I^2 + Q^2}.$$

All these functions are performed by under-sampling the intermediate frequency signal IF. Also in the receiver of the second embodiment the two demodulations are independent, although the fact is not immediately apparent because they are both originated by a common I-Q section. More in detail, the module of the carrier obtained with the above expression is independent of the actual phase, contrarily to the QAM and PAM-PSK where the amplitudes of the two components I, Q are separately decoded to determine a symbol of the constellation inclusive of both phase and module at the same time.

Simulations and measures made on a prototype system for 8-phase CPM and 2-levels amplitude modulation show an output spectrum which satisfies the same mask as the 16 QAM modulation format. The BER curve is shifted towards higher S/N values by approximately 2.5 dB, but the higher transmission power obtainable by the proposed double modulation schema gives similar, or even higher, performances.

From the description of the transmitter and the receiver, it is apparent that they operate accordingly to the modulation and demodulation method disclosed in the introductive part.

**Claims**

1. A modulation method for impressing information symbols on a radiofrequency transmission carrier, **characterized in that** includes the steps of:

   - subdividing the group of bits representing each symbol into two groups of bits (N, M) belonging to first or second digital words;
   - phase or frequency modulating the transmission carrier into one out of a predetermined number of discrete phase/frequency steps according to the values assumed by the first digital words (N);
   - in parallel with and independently from the preceding step, amplitude modulating the transmission carrier into one out of a predetermined number of discrete amplitude steps according to the values assumed by the second digital words (M).

2. The modulation method of the preceding claim, **characterized in that** the number of bits of the second group (M) with respect to the number of bits of the first group (N) increases as the value of the amplitude modulation index increases.

3. The modulation method of one of the preceding claims, **characterized in that** the logical values of the bits of the first group are assigned according to a differential encoding rule.

4. A demodulation method for recovering information symbols from a radiofrequency carrier modulated as in the claim 1, **characterized in that** includes the steps of:

   - phase or frequency demodulating the modulated carrier for obtaining first digital words (N);
   - in parallel with and independently from the preceding step, amplitude demodulating the modulated carrier for obtaining second digital words (M);
   - assembling the first and the second digital words into third digital words meeting with the subdivision rule, for obtaining an estimate of the information symbols.

5. The demodulation method of the preceding claim, **characterized in that** the first digital words (N) are differentially decoded.

6. Digital radio transmitter for carrying out the modulation method of claim 1, including:

   - means (CPM/FM MOD) for phase or frequency modulating a transmission carrier into one out of a predetermined number of discrete phase/frequency steps according to the values assumed by first digital words (N);
   - means (CC-PWA) for radiofrequency power amplifying the modulated transmission carrier;

   **characterized in that** further includes:

   - means (MAP) for subdividing the group of bits representing a symbol into two groups of bits (N, M) obtaining first and second digital words;
   - means (D/A) for generating one out of a predetermined number of discrete amplitude steps according to the values assumed by the second digital words (M);
   - means for superimposing an amplitude modulation (CC-PWA, RFP-ATT) to the phase or frequency modulated transmission carrier according to the actual amplitude step.

7. The digital transmitter of the preceding claim, **characterized in that** said means for superimposing an amplitude modulation (CC-PWA) also coincide with said means for radiofrequency power amplifying (CC-PWA).

8. The digital transmitter of the preceding claim, **characterized in that** said means for radiofrequency power amplifying (CC-PWA) include a power FET polarized into the saturation region and subjected to drain modulation for modulating the supplied voltage according to said actual amplitude step.

9. The digital transmitter of claim 6, **characterized in that** said means for superimposing an amplitude modulation (RFP-ATT) are connected downstream the radiofrequency power amplifying means (CC-PWA).

10. The digital transmitter of the preceding claim, **characterized in that** said means for superimposing an amplitude modulation include a variable attenuator (RFP-ATT) controlled by said actual amplitude step.

11. Digital radio receiver for cooperating with the transmitter of claim 6, **characterized in that** includes:

   - means for phase or frequency demodulating (LIMITER, CPM/FM DEMOD) the received carrier obtaining first digital words (N);
   - means for amplitude demodulating (AM DEMOD) the received carrier obtaining second digital words (M);
   - means for assembling the first and the second digital words intro third digital words meeting with the subdividing rule used by the transmitter, obtaining an estimate of the information symbols.

12. The digital receiver of the preceding claim, **characterized in that** includes a digital processor (DMA) for carrying out said phase or frequency demodulating means (CPM/FM DEMOD) like a quadrature demodulator and said amplitude demodulating means (AM DEMOD) like a mathematical unit for calculating the module of the vector subtended by the two components in quadrature filtered in baseband.

# DIGITAL TRANSMITTER (KNOWN ART)

**FIG. 1**

EP 1 536 605 A1

# EXAMPLES OF CONSTELLATIONS (KNOWN ART)

(a) 16 QAM

(b) 64 QAM

(c) PAM-PSK, M = 8

(d) PAM-PSK, M = 16

**FIG. 2**

EP 1 536 605 A1

# CPM/FM & AM TRANSMITTER STRUCTURE

**FIG. 3**

EP 1 536 605 A1

## STAGE AA: CPM/FM signal generated at carrier frequency directly

from RF-OL

CPM/FM MOD

N

to RF-FILT

**FIG. 3a**

EP 1 536 605 A1

## STAGE BB: Controlled RF attenuator (AM Modulation)

CC-PWA

RFP-ATT

from PREAMP

RF OUT

from VIDEO AMPLIFIER

**FIG. 3b**

# CPM/FM & AM RECEIVER STRUCTURE

**FIG. 4**

EP 1 536 605 A1

# CPM/FM & AM RECEIVER
# DIGITAL STRUCTURE

**FIG. 5**

EP 1 536 605 A1

**European Patent Office**

## EUROPEAN SEARCH REPORT

Application Number

EP 03 42 5760

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/141510 A1 (SRIDHARAN GURUSWAMI M ET AL) 3 October 2002 (2002-10-03)<br>* paragraph [0005] - paragraph [0006] *<br>* paragraph [0010] *<br>* paragraph [0025] - paragraph [0026] *<br>* paragraph [0034] - paragraph [0036] *<br>* figures 2,3 *<br>----- | 1-12 | H04L27/36<br>H04L27/38 |
| X | EP 1 061 706 A (ERICSSON) 20 December 2000 (2000-12-20)<br>* paragraph [0006] *<br>* figure 1 *<br>----- | 1-12 | |
| X | US 5 469 127 A (BROOKES) 21 November 1995 (1995-11-21)<br>* figure 11 *<br>----- | 4,11,12 | |

TECHNICAL FIELDS SEARCHED (Int.Cl.7)

H04L

The present search report has been drawn up for all claims

| Place of search | Date of completion of the search | Examiner |
|---|---|---|
| The Hague | 25 June 2004 | Scriven, P |

EPO FORM 1503 03.82 (P04C01)

**ANNEX TO THE EUROPEAN SEARCH REPORT
ON EUROPEAN PATENT APPLICATION NO.**    EP 03 42 5760

This annex lists the patent family members relating to the patent documents cited in  the above-mentioned European search report.
The members are as contained in the European Patent Office EDP file on
The European Patent Office is in no way liable for these particulars which are merely  given for the purpose of information.

25-06-2004

| Patent document cited in search report | | Publication date | Patent family member(s) | | Publication date |
|---|---|---|---|---|---|
| US 2002141510 | A1 | 03-10-2002 | EP | 1374519 A1 | 02-01-2004 |
| | | | WO | 02080484 A1 | 10-10-2002 |
| EP 1061706 | A | 20-12-2000 | EP | 1061706 A1 | 20-12-2000 |
| | | | AU | 4944000 A | 02-01-2001 |
| | | | EP | 1212877 A1 | 12-06-2002 |
| | | | WO | 0077997 A1 | 21-12-2000 |
| US 5469127 | A | 21-11-1995 | US | 5450044 A | 12-09-1995 |
| | | | US | 5367272 A | 22-11-1994 |
| | | | US | 5260674 A | 09-11-1993 |
| | | | AU | 6665794 A | 08-11-1994 |
| | | | CA | 2160592 A1 | 27-10-1994 |
| | | | CN | 1121383 A | 24-04-1996 |
| | | | EP | 0694228 A1 | 31-01-1996 |
| | | | JP | 8509333 T | 01-10-1996 |
| | | | WO | 9424759 A1 | 27-10-1994 |

EPO FORM P0459

For more details about this annex : see Official Journal of the European Patent Office, No. 12/82